Europäisches Patentamt

**European Patent Office**

**Office européen des brevets**

Veröffentlichungsnummer: **0 272 511**
A2

# EUROPÄISCHE PATENTANMELDUNG

Anmeldenummer: **87117857.0**

Int. Cl.⁴ **F16L 23/02**

Anmeldetag: **03.12.87**

Priorität: **22.12.86 DE 3644065**
**23.06.87 DE 3720620**

Veröffentlichungstag der Anmeldung:
**29.06.88 Patentblatt 88/26**

Benannte Vertragsstaaten:
**FR GB IT**

Anmelder: **Firma RHYDCON Groten GmbH + Co. KG**
**Ridderstrasse 37**
**D-4422 Ahaus(DE)**

Erfinder: **Groten, Karl J.**
**Sunderhues Esch 12**
**D-4422 Ahaus(DE)**

Vertreter: **Habbel, Hans-Georg, Dipl.-Ing.**
**Postfach 3429 Am Kanonengraben 11**
**D-4400 Münster(DE)**

Verfahren zur Herstellung von Rohrverbindungen für Hochdruckhydraulikleitungen.

Die bisher bekannten Rohrverbindungen für Hochdruckhydraulikleitungen sind kostenaufwendig, benötigen eine große Baulänge und führen zu Materialänderungen im Verbindungsbereich der Kehl-oder V-Schweißnähte.

Gemäß der Erfindung wird vorgschlagen, auf das Rohr einen Flanschring aufzusetzen, der auf seiner Innenseite mit einer konkaven Profilierung versehen ist und anschließend das Rohr durch ein Aufweitverfahren vom elastischen in den plastischen Zustand überzuführen, um dadurch das Rohr in die konkave Ausnehmung des Flanschringes einzulegen und hierdurch eine sichere Verbindung des Flanschringes auf dem Rohr zu erreichen.

EP 0 272 511 A2

## "Verfahren zur Herstellung von Rohrverbindungen für Hochdruckhydraulikleitungen"

Die Erfindung bezieht sich auf ein Verfahren zur Herstellung von Rohrverbindungen gemäß dem Oberbegriff des Hauptanspruches.

Rohre werden im Stand der Technik durch viele bekannte Hilfsmittel miteinander verbunden, z. B. mittels Gewinde und Gewindemuffen, durch Verschweißen od. dgl.

Im Bereich der Hochdruckhydraulik werden aufgrund der hier auftretenden hohen Beanspruchungen einerseits durch den hohen Druck, andererseits durch die ständig auftretenden Vibrationen und Druckstöße besondere Verbindungsmittel eingesetzt, nämlich sogenannte Anschweißmuffen, die mit einer Kehlnaht oder V-Naht an die Rohre angeschlossen werden. Diese Anschweißmuffen dienen dann als Halterung für Voll-oder Halbflansche, die mit geeigneten Schrauben die Verbindung herstellen.

Diese bekannte Anschweißmuffen haben den Nachteil, daß zu ihrer Herstellung ein hoher technischer Aufwand erforderlich ist, der sehr sorgfältig überwacht werden muß, wobei trotzdem immer noch Unsicherheiten im Bereich der Schweißnaht bestehen bleiben, die häufig zu Schäden führen, wobei dann nicht nur die erforderlichen Reparaturzeiten störend sind, sondern auch die Tatsache, daß austretendes Hydrauliköl, beispielsweise bei Baumaschinen od. dgl., zu Bodenverunreinigungen führen können. Durch das Anschweissen der Muffen entstehen außerdem im Muffen-und Rohrbereich Materialveränderungen und die auftretenden Verzunderungen auf der Innenseite müssen zusätzlich entfernt werden.

Der Einsatz der Anschweißmuffen hat zudem den Nachteil, daß hohe Baumaße notwendig werden, die gerade bei Maschinen und Fahrzeugen unerwünscht sind und daß schließlich die eigentlichen Anschweißmuffen als Drehteile hergestellt werden, die wiederum kostenaufwendig sind.

Der Erfindung liegt die Aufgabe zugrunde, eine Rohrverbindung, insbesondere für Hochdruckhydraulikleitungen zu schaffen, die kostengünstig hergestellt werden kann, aber trotzdem eine hohe Sicherheit gibt, und zwar auch bei den innerhalb von Hydraulikleitungen auftretenden hohen Druckstößen und trotz der starken Vibrationen, denen solche Verbindungen im Betrieb ausgesetzt sind.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt, wird virgeschlagen, Flanschringe aus hochfesten Werkstoffen auf das für die Verbindung auszurüstende Rohr aufzusetzen, wobei die Flanschringe auf der Innenseite, d.h. also im Bereich ihrer Bohrung mit der sie das Rohr übergreifen, in besonderer Weise konkav profiliert sind, so daß bei aufgesetztem Flanschring zwischen der Außenseite des Rohres und der Innenseite der zylindrischen Bohrung des Flanschringes ein Hohlraum gebildet wird. Anschließend wird das Rohr mit Hilfe von hydraulischen oder explosiv arbeitenden Verfahren so aufgeweitet, daß es vom elastischen in den plastischen Zustand überführt wird und dabei wird der Rohrbereich, der im Bereich der konkaven Ausnehmung des Flanschringes liegt, in diese konkave Ausnehmung hineingepreßt und ergibt damit eine unlösbare und dichte, z. T. sogar metallische Verbindung zwischen Flanschring und Rohraußenseite. Hierbei ist es selbstverständlich, daß sich die Art der Ausnehmung im Bereich des Flanschringes nach dem Rohrdurchmesser und der Materialart des Rohres richtet.

Zusätzlich kann auf der Innenseite des Flanschringes eine Aufnahmenut für eine Zusatzdichtung vorgesehen sein und gleichzeitig kann der Flanschring an seiner Anschlußseite mit einer oder mehreren Nuten zur Aufnahme von Anschlußdichtungen ausgerüstet werden. Schließlich kann an dem Flanschring sofort die erforderliche Bundkante ausgeformt werden, die als Widerlager für den anzuschließenden Halb-oder Vollflansch dient.

Hierbei kann die äußere Form des Flanschringes so gestaltet werden, daß der Flanschring selbst ent weder als Bundkante ausgebildet ist oder eine zusätzliche Bundkante aufweist.

Ein Ausführungsbeispiel der Erfindung wird nachfolgend anhand der Zeichnung erläutert. Die Zeichnung zeigt dabei in

Fig. 1 einen Rohrabschnitt mit aufgesetztem Flanschring vor durchführen des Aufweitverfahrens, in

Fig. 2 den Rohrabschnitt gemäß Fig. 2 bei durchgeführtem Aufweitverfahren und in

Fig. 3 eine abgeänderte Ausführungsform.

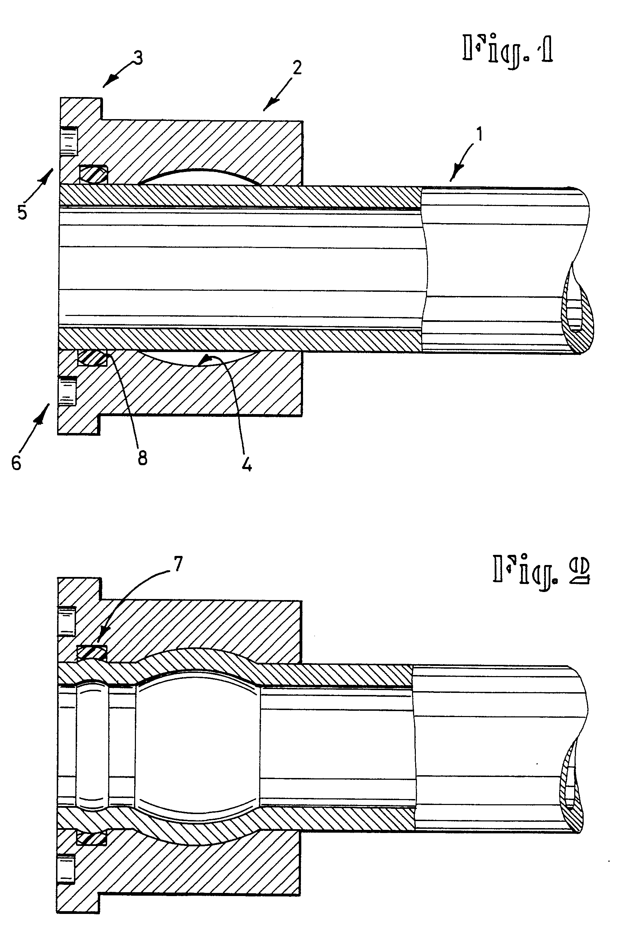

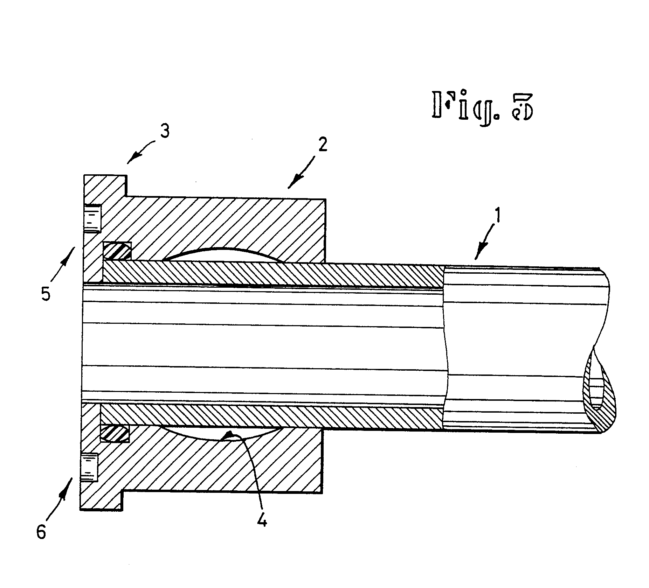

In den Zeichnungen ist mit 1 ein Rohr bezeichnet und mit 2 ein auf das vordere Ende des Rohres 1 aufgesetzter Flanschring 2. Der Flanschring 2 weist eine vordere Anschlußseite 5 auf und im eingesetzten Zustand fluchtet gemäß Fig. 1 und 2 die Stirnkante des Rohres 1 mit der Anschlußseite 5 des Flanschringes 2. Gemäß Fig. 3 übergreift die Anschlußseite 5 das eingesteckte Rohr 1.

Bei den dargestellten Ausführungsbeispielen ist an dem Flanschring 2 eine Bundkante 3 ausgeformt, die als Widerlager für einen anzuschließenden Halb-oder Vollflansch dient, der in der Zeichnung nicht dargestellt ist.

Zusätzlich ist in der Anschlußseite 5 eine Nut 6 zur Aufnahme der Anschlußdichtung vorgesehen.

Auf der zylindrischen Innenseite des Flanschringes 2 ist eine konkave Ausnehmung 4 ausgearbeitet, so daß zwischen dem gemäß Fig. 1 eingesetzten Rohr 1 und dem Flanschring 2 ein Hohlraum verbleibt. Eine zusätzliche Nut 8 auf der Innenseite des Flanschringes dient der Aufnahme einer Zusatzdichtung 7.

Wenn der Flanschring 2 gemäß der Darstellung in Fig. 1 und 3 auf das Rohr 1 aufgesetzt ist, wird auf der Innenseite des Rohres in an sich bekannter Weise das Rohr 1 so hydraulisch oder durch Explosionsverfahren aufgeweitet, daß das Rohr 1 vom elastischen in den plastischen Bereich verformt wird und sich dabei in die Ausnehmung 4 einlegt, diese ausfüllend, so daß die dichte Verbindung gemäß Fig. 2 erzielt wird. Wird die Nut 8 zusätzlich auf der Innenseite des Flanschringes 2 vorgesehen, erfolgt auch hier eine Verformung des Rohres in den Nutbereich 8 hinein, da die Zusatzdichtung 7 entsprechend nachgeben kann.

Hierdurch entsteht eine unlösbare Verbindung zwischen Flanschring 2 und Rohr 1, wobei insbesondere durch Einsatz bekannter hydraulischer Aufweitverfahren die Verformung genau kontrollierbar und reproduzierbar ist, so daß jederzeit die erforderliche feste und sichere Festlegung des Flanschringes 2 auf dem Rohr 1 kontrollierbar ist. Hierdurch werden derartige Rohrverbindungen, insbesondere für Hochdruckhydraulikleitungen, einsetzbar.

## Ansprüche

1. Verfahren zur Herstellung von Rohrverbindungen, insbesondere für Hochdruckhydraulikleitungen mit einem an einem Rohr (1) angeordneten Flanschring (2), der eine an seiner Außenseite vorgesehene Bundkante (3) als Widerlager für einen als Voll-oder Halbflansch ausgebildeten Verbindungsflansch aufweist, dadurch gekennzeichnet, daß der Flanschring (2) auf seiner Innenseite mit einer Ausnehmung (4) versehen und über die Außenseite des Rohres (1) aufgesetzt wird und dann das Rohr (1) im Bereich des Flansch ringes (2) durch ein Aufweitverfahren vom elastischen in den plastischen Bereich überführt und in die Ausnehmug (4) hineinverformt wird.

2. Verfahren nach Anspruch 1, dadurch gekennzeichnet, daß die Innenseite des Flanschringes (2) je nach Rohrdurchmesser und Rohrwerkstoff profiliert ist.

3. Verfahren nach Anspruch 1 und 2, dadurch gekennzeichnet, daß die Anschlußseite (5) des Flanschringes (2) bei eingesetztem Rohr (1) mit der Rohrstirnseite fluchtet (Fig. 1 und 2).

4. Verfahren nach Anspruch 1 und 2, dadurch gekennzeichnet, daß die Anschlußseite (5) des Flanschringes (2) bei eingesetztem Rohr (1) die Rohrstirnseite übergreift (Fig.3).

5. Verfahren nach einem oder mehreren der vorhergehenden Ansprüche, dadurch gekennzeichnet, daß das Oberführen des Rohres (1) vom elastischen in den plastischen Zustand und damit das Aufweiten des Rohres (1) und Einlegen des Rohres (1) in die Ausnehmung (4) durch ein hydraulisches Aufweitverfahren erfolgt.

6. Verfahren nach einem oder mehreren der vorhergehenden Ansprüche 1 bis 4, dadurch gekennzeichnet, daß die Verformung des Rohres (1) im Bereich des Flanschringes (2) durch Energiezufuhr mittels Explosionsverfahren erfolgt.

7. Verfahren nach einem oder mehreren der vorhergehenden Ansprüche, dadurch gekennzeichnet, daß vor Aufsetzen des Flanschringes (2) auf das Rohr (1) an der Anschlußseite des Flanschringes (2) eine Nut (6) zur Aufnahme einer Dichtung eingearbeitet wird.

8. Verfahren nach einem oder mehreren der vorhergehenden Ansprüche, dadurch gekennzeichnet, daß zusätzlich zu der Ausnehmung (4) im Flanschring (2) eine weitere Nut (8) auf der Innenseite des Flanschringes (2) zur Aufnahme einer Zusatzdichtung (7) eingearbeitet wird.

0 272 511

Fig. 1

Fig. 2

Fig. 5